# EUROPÄISCHE PATENTANMELDUNG

(11) **EP 1 491 809 A1**
(43) Veröffentlichungstag der Anmeldung: **29.12.2004**
(21) Anmeldenummer: 04090246.2
(22) Anmeldetag: 21.06.2004
(51) Int. Cl.: F16L 13/14

(54) **Rohrpressverbindung**

(30) Priorität: 25.06.2003 DE 10329254
(71) Anmelder: Geberit Mapress GmbH, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrpressverbindung bestehend aus einem metallischen Fittingelement, in das ein metallisches Leitungsrohr mit radialem Spiel einschiebbar ist und das im Überdeckungsbereich mit mindestens einem Dichtelement und einem ringwulstartigen Element versehen ist, das mit einem zylindrisch ausgebildeten Abschnitt verbunden ist, wobei mittels einem das ringwulstartige Element umfassenden, mindestens zwei Pressbacken aufweisenden Presswerkzeuges nach dem Ansetzen und Schließen eine unlösbare Rohrpressverbindung gebildet wird und während des Verpressens die Pressbacken sowohl auf den Ringwulst als auch auf den zylindrisch ausgebildeten Abschnitt des Fittingelementes einwirken. Dabei ist der Ringwulst als separates Teil ausgebildet, das stoff-, kraft- oder formschlüssig mit dem zylindrisch ausgebildeten Abschnitt (3) des Fittingelementes (1) im Überdeckungsbereich mit dem Leitungsrohr (8) frei positionierbar, verbunden ist.

## Beschreibung

Die Erfindung betrifft eine Rohrpressverbindung, bestehend aus einem Fittingelement und einem darin eingeschobenen Leitungsrohr gemäß dem Oberbegriff des Patentanspruches 1.

Rohrpressverbindungen als Pressfitting-System für die Hausinstallation aus Kohlenstoffstahl oder hochlegiertem Stahl sowie Kupfer sind bekannt und über viele Jahre bewährt (s. Prospekt Mapress GmbH, Lieferprogramm 412001). Dieses System besteht im Wesentlichen aus einem plastisch verformbaren Fittingelement, das je nach Anwendungsbereich als Bogen- oder T-Stück, Muffe oder Übergangsstück ausgebildet oder mit einer Anschlussverschraubung versehen ist.

Der Einschubbereich des einteilig hergestellten Fittingelementes ist als Ringwulst ausgebildet und weist eine einen Dichtring aufnehmende Ausnehmung auf. An den Ringwulst schließt sich ein sich in Längsrichtung erstreckender, zylindrisch ausgebildeter Abschnitt an, in den das Leitungsrohr eingeschoben wird. Mittels eines mindestens zwei Pressbacken aufweisenden Presswerkzeuges wird der Ringwulst plastisch und der Dichtring elastisch verformt. Zusätzlich wird mit dem gleichen Pressvorgang im zylindrischen Bereich des Fittingelementes in unmittelbarer Nähe des Ringwulstes eine sickenförmige Vertiefung angepresst, die auch das darunter liegende eingeschobene Leitungsrohr mit erfasst. Der elastisch verformte Dichtring übemimmt bei diesem Verbindungssystem die Dichtfunktion, während die angepresste sickenförmige Vertiefung die durch den Innendruck entstehenden Längskräfte sowie einen Teil der Momente aufnimmt.

Diese seit vielen Jahren bewährte Rohrpressverbindung mit Fittingelement und Leitungsrohr hat den Nachteil, dass die Herstellung eines einteiligen, mit einem Ringwulst versehenen Fittingelementes viele Umformschritte erfordert und deshalb sehr kostenaufwändig ist. Ein weiterer Nachteil ist, dass die Positionierung des Werkzeuges durch die vorgegebene Anordnung des Ringwulstes am Fittingelement festgelegt und damit unflexibel ist.

Aus der DE 299 07 585 U1 ist ein Pressfitting für Kunststoffrohre oder Kunststoff/metall-Verbundrohre bekannt, bei der die Verpressung des Leitungsrohrendes mit einem eingeschobenen metallischen Fitting beschrieben wird. Der Fitting ist im Einschubbereich mit einer Anzahl von Rillen versehen, in die Dichtringe eingelegt werden können. Das Ende des Kunststoffrohres ist im Verpressbereich am Außenumfang mit einer Presshülse versehen, die in einer am Außenumfang liegenden Nut einen axial fest positionierten Ringwulst zur Führung des Presswerkzeuges aufweist. Mit dem Presswerkzeug wird über die Presshülse das Leitungsrohr radial gestaucht, wobei die Dichtigkeit und die axiale Sicherung des Leitungsrohres auf dem Fitting durch plastisches Eindrücken der Rohrinnenoberfläche in die Rillen des Fittings erreicht wird.
Nachteilig bei diesem bekannten Fitting ist, dass diese Art der Verbindung für ein metallisches Rohr ungeeignet ist, da bei metallischen Rohren eine axiale Sicherung durch plastisches Eindrücken der Rohrinnenoberfläche in die Rillen des Fittings, wenn überhaupt, dann nur mit erheblichen Verpresskräften möglich ist. Nachteilig ist weiterhin, dass die hierfür zu verwendenden Presswerkzeuge für metallische Leitungsrohre ungeeignet sind, da eine Trennung von Dicht- und axialer Sicherungsebene nicht gegeben ist.
Eine flexible axiale Anordnung des Presswerkzeuges im Verpressbereich ist durch den axial festgelegten Ringwulst ebenfalls nicht möglich.
Nachteilig bei diesem bekannten Fitting ist weiterhin, dass aus Stabilitätsgründen das Kunststoffrohr nur auf den als Stützhülse wirkenden Fitting aufgeschoben und verpresst werden kann. Eine Verwendung als ein auf das Kunststoffrohr aufgeschobener Außenfitting ist nicht realisierbar.

Aus der DE 197 48 937 C1 ist eine Rohrverbindung bekannt, bei der der glattendige Endabschnitt eines zylindrisches Rohres in einen Fitting einschiebbar ist. Die Aufgabe besteht darin, eine Rohrverbindung mit einem Außenfitting anzugeben, bei der die erforderliche Einstecktiefe, bzw. die erforderliche Überdeckung zwischen Rohr und Fitting nach dem Einschieben erkennbar ist. Dazu ist in der Verbindungsebene eine mit Dichtelementen versehene Metallhülse angeordnet, die mit einem radial nach außen und innen gerichteten Kragen versehen ist, die die Einschubtiefe durch Anschlagen an die jeweiligen Stimflächen von Leitungsrohr und Fitting begrenzen.
Nachteilig bei dieser Rohrverbindung ist, dass die bekannten Presswerkzeuge für diese Art der Rohrverbindung nicht genutzt werden können, da eine für das Presswerkzeug bildende Führung über einen Ringwulst am Fitting nicht vorhanden ist.

Aufgabe der Erfindung ist es, eine Rohrpressverbindung der gattungsgemäßen Art anzugeben, die unter Beibehaltung der bewährten Presstechnik, wobei das Presswerkzeug über einen am Fitting angeordneten Ringwulst geführt wird, ein in einfacher und kostengünstiger Weise herzustellendes Fittingelement verwendet, welches die flexible Anordnung des Presswerkzeuges im Verpressbereich ermöglicht.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird nicht mehr ein einteilig hergestelltes Fittingelement mit einem Ringwulst im Einschubbereich verwendet, sondern der Ringwulst wird als separates Teil hergestellt, welches stoff-, kraft- oder formschlüssig mit dem zylindrisch ausgebildeten Abschnitt des Fittingelementes im Überdeckungsbereich frei positionierbar verbunden ist. Der Ringwulst ist als eine eine Positionierung bildende Kappe ausgebildet, die wahlweise aus Metall oder Kunststoff hergestellt wird. Das Fittingelement und das Leitungsrohr sind vorzugsweise aus Metall hergestellt, insbesondere aus C-Stahl, Edelstahl oder Kupfer.

Der Vorteil ist hierbei, dass zur Herstellung einer Rohrpressverbindung als zylindrischer Abschnitt des Fittingelementes nur noch ein sehr preiswert herzustellendes abgetrenntes Rohrstück verwendet wird, welches mit einem ebenfalls sehr preiswert herzustellenden Standard-Ringwulstelement verbunden wird, so dass ein mit einem Leitungsrohr verpressfähiges Fittingelement entsteht.

Ein solches Ringwulstelement kann für verschiedene standardmäßig zu verbindende Leitungsrohrdurchmesser ausgelegt werden, so dass gegenüber dem bekannten Pressfittingelement neben geringeren Fertigungskosten auch geringere Kosten für Lagerhaltung und Logistik entstehen.
Die Erfindung ist nicht nur bei Verwendung eines Außenfittings anwendbar sondern analog auch für einen Innenfitting, auf den ein Leitungsrohr aufgeschoben wird.

Gegenüber dem bekannten Fittingelement, das im einschubseitigen Endbereich das ringwulstförmige Element aufweist, ist die erfindungsgemäße Rohrpressverbindung so gestaltet, dass die Kappe auch in einer beliebigen Position, vorzugsweise aber im mittleren Bereich der Überdeckung mit dem Leitungsrohr angeordnet werden kann. Somit wird eine größere Flexibilität im Anwendungsbereich der Rohrpressverbindung realisiert.

Die Funktionsweise dieses Fittingelementes entspricht damit im Wesentlichen dem nach dem Stand der Technik bekannten Fittingelement, wobei der Ringwulst als Führung für ein Standard- Verpresswerkzeug dient.

Zur Realisierung der Abdichtung ist das Dichtelement auf der Innenseite des zylindrisch ausgebildeten Abschnittes des Fittingelementes im Überdeckungsbereich mit dem Leitungsrohr angeordnet. Das Dichtelement kann in der axialen Position veränderbar angeordnet oder aber stoffschlüssig mit dem Fittingelement verbunden sein. Wichtig ist, dass das Dichtelement im Erfassungsbereich des Presswerkzeuges angeordnet ist, damit das Dichtelement eine radiale elastische Komprimierung erfährt, die für eine dauerhafte Dichtwirkung zwischen Fittingelement und Leitungsrohr notwendig ist.
Das für die Rohrpressverbindung verwendete Dichtelement ist vorteilhaft als elastischer Dichtring ausgebildet.

Vorteil ist hierbei, dass die separate Kappe nur noch als Führungselement für das Verpresswerkzeug dient und keine zusätzliche Dichtfunktion mehr ausübt. Die Kappe kann somit noch kostengünstiger gefertigt werden, da auf eine das Dichtelement aufnehmende Ausnehmung verzichtet werden kann.

Nach einem weiteren vorteilhaften Merkmal ist neben dem Dichtelement ein Distanzstück angeordnet, dessen radiale Erstreckung geringer ist, als die radiale Querschnittserstreckung des Dichtelementes im unverpressten Zustand. Das Distanzstück kann beispielsweise auch als Hülse ausgebildet sein.

Durch die Anordnung eines Distanzstückes bzw. einer Hülse neben dem Dichtelement wird erreicht, dass bei der Herstellung der Verpressung das Dichtelement radial nur so weit verformt wird, dass die zur dauerhaften Abdichtung notwendigen elastischen Rückstelleigenschaften des Dichtmaterials erhalten bleiben.

Gemäß einer vorteilhaften Weiterbildung kann das Dichtelement aber auch, beispielsweise durch Vulkanisieren, in die Hülse integriert sein, wobei das Dichtelement im unverpressten Zustand radial über die Innen- und Außenfläche der Hülse übersteht, um so den für die Abdichtung notwendigen Kontakt zwischen Fittingelement und Leitungsrohr sicherzustellen. Vorteil dieser Anordnung ist, dass nicht mehr zwei separate Bauteile bei der Herstellung der Rohrpressverbindung montiert werden müssen, sondern die Hülse zusammen mit dem Dichtelement, als ein vorgefertigtes Bauteil montiert werden kann.

Alternativ zum in der Hülse integrierten Dichtelement, kann aber auch auf der Hülsenaußen- oder -innenseite je ein Dichtelement angeordnet sein.

Zur Sicherstellung einer für eine qualitätssichere Rohrpressverbindung notwendige reproduzierbare axiale Positionierung des mit der Hülse verbundenen Dichtelementes im Fittingelement, ist die Hülse einschubseitig mit einem sich nach außen erstreckenden Kragen versehen, der bei der Montage an der Stimfläche des zylindrisch ausgebildeten Abschnittes des Fittingelementes zur Anlage kommt.

Nach einem weiteren Merkmal kann zur Sicherstellung eines ausreichend weiten Einschubes des Leitungsrohres in das Fittingelement, der zylindrische Abschnitt mit einer einen Axialanschlag bildenden Sicke versehen sein, bis zu der das Leitungsrohr eingeschoben wird. Vorteilhaft wird die Sicke während des Abtrennens des Rohrstückes im gleichen Arbeitsgang in den zylindrischen Abschnitt eingepresst.

Weitere Merkmale, Vorteile und Einzelheiten der Erfindung ergeben sich aus der nachfolgenden Beschreibung.

Es zeigen:
- **Figur 1**: Rohrpressverbindung mit im mittleren Bereich der Überdeckung angeordnetem Ringwulst mit Distanzstück und Dichtelement,
- **Figur 2**: wie Figur 1, jedoch mit im Distanzstück integriertem Dichtelement,
- **Figur 3**: Rohrpressverbindung mit im Einschubbereich angeordnetem Ringwulst und mit auf einer Hülse auf der Außen- und Innenseite angeordnetem Dichtelement.

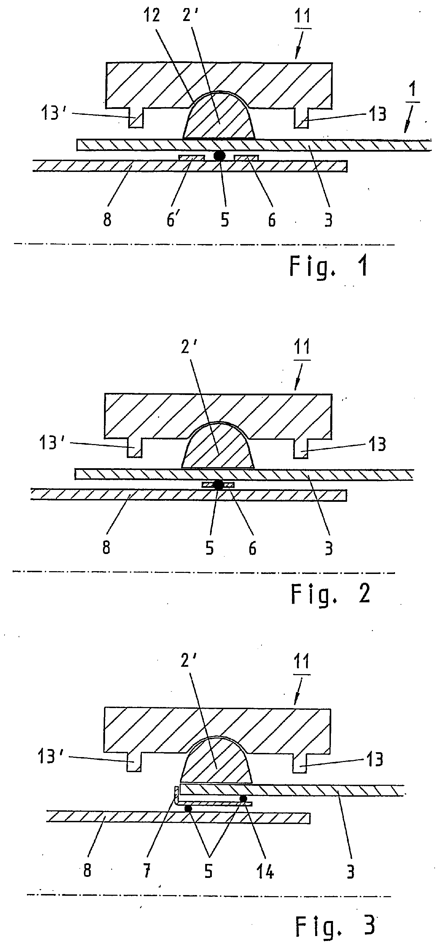

In **Figur 1** ist beispielhaft eine weitere Ausführungsform der erfindungsgemäßen Rohrpressverbindung dargestellt.

Das Fittingelement 1 besteht aus einem zylindrischen Abschnitt 3 in den ein Leitungsrohr 8 mit radialem Spiel eingeschoben ist. Im mittleren Bereich der Überdeckung ist ein als Kappe 2' ausgebildeter Ringwulst angeordnet. Die Kappe 2' hat keine Dichtfunktion und dient nur als Führung für das Presswerkzeug 11.

Im Erfassungsbereich des Presswerkzeuges 11 sind mit axialem Abstand auf dem Leitungsrohr 8 zwei Distanzstücke 6 angeordnet, zwischen denen sich das Dichtelement 5 befindet. Die radiale Erstreckung der Distanzstücke 6 ist geringer, als die radiale Querschnittserstreckung des Dichtelementes 5, so dass bei der Verpressung das Dichtelement 5 nur maximal bis zur radialen Erstreckung der Distanzhülsen 6 elastisch verformt wird. Bei dieser Anordnung wird eine doppelte Axialsicherung der Verbindung. beidseitig zur Kappe 2' erreicht.

Es ist ebenso möglich, dass die Kappe 2' im einschubseitigen Endbereich des zylindrisch ausgebildeten Abschnittes 3 angeordnet ist, so dass die Verbindung nur einseitig axial gesichert wird.

Nach einem weiteren Merkmal der Erfindung wird das Dichtelement 5 und ein oder mehrere Distanzstücke 6 im zylindrischen Abschnitt 3 vormontiert, wobei das Dichtelement 5, gegen axiales Verschieben gesichert, stoffschlüssig an die Innenfläche des zylindrischen Abschnittes 3 angeschlossen werden kann.

Alternativ zur Verwendung zweier Distanzstücke 6 kann auch nur eines verwendet werden, wobei das Dichtelement 5 neben dem Distanzstück 6 angeordnet oder im Distanzstück 6 integriert sein kann.

**Figur 2** zeigt beispielhaft eine Rohrpressverbindung, bei der das Dichtelement 5 im Distanzstück 6 integriert und im Erfassungsbereich der Pressbacke 11 zwischen zylindrischem Abschnitt 3 und Leitungsrohr 8 angeordnet ist.

Die Möglichkeit einer definierten axialen Lageposition des Dichtelementes 5 im Erfassungsbereich der Pressbacke ist in **Figur 3** dargestellt.

In den zylindrischen Abschnitt 3 des Fittingelementes 1 ist ein als Hülse 14 ausgebildetes Distanzstück 6 eingeschoben. Auf der Hülse 14 sind auf der Außen- und auf der Innenseite je eine Dichtelement 5 angeordnet. Die Hülse 14 weist einschubseitig einen sich nach außen erstreckenden Kragen 7 auf, der nach der Montage der Hülse 14 an der Stirnfläche des zylindrischen Abschnittes 3 des Fittingelementes 1 zur Anlage kommt. In die Hülse 14 ist das Leitungsrohr 8 so weit eingeschoben, dass es sich im Erfassungsbereich des Presswerkzeuges befindet.
In einer vorteilhaften Weiterbildung kann die Hülse 13 zusätzlich einen radial nach innen gerichteten Kragen aufweisen, so dass beim Einführen des Leitungsrohres 8 in die Hülse 14 die Stimfläche an diesem Kragen zur Anlage kommt und somit auf einer Weise die zur Verpressung notwendige Einschubtiefe sichergestellt wird.

### Bezugszeichenliste

| **Nr.** | **Bezeichnung** |
|---|---|
| 1 | Fittingelement |
| 2' | Kappe |
| 3 | zylindrischer Abschnitt |
| 5 | Dichtelement |
| 6 | Distanzstück |
| 7 | Kragen |
| 8 | Leitungsrohr |
| 11 | Pressbacke |
| 12 | Führungsnut |
| 13, 13' | Presssteg |
| 14 | Hülse |

## Patentansprüche

1. Rohrpressverbindung bestehend aus einem metallischen Fittingelement, in das ein metallisches Leitungsrohr mit radialem Spiel einschiebbar ist und das im Überdeckungsbereich mit mindestens einem Dichtelement und einem ringwulstartigen Element versehen ist, das mit einem zylindrisch ausgebildeten Abschnitt verbunden ist, wobei mittels einem das ringwulstartige Element umfassenden, mindestens zwei Pressbacken aufweisenden Presswerkzeuges nach dem Ansetzen und Schließen eine unlösbare Rohrpressverbindung gebildet wird und während des Verpressens die Pressbacken sowohl auf den Ringwulst als auch auf den zylindrisch ausgebildeten Abschnitt des Fittingelementes einwirken,
**dadurch gekennzeichnet,**
**dass** der Ringwulst als separates Teil ausgebildet ist, das stoff-, kraft- oder formschlüssig mit dem zylindrisch ausgebildeten Abschnitt (3) des Fittingelementes (1) im Überdeckungsbereich mit dem Leitungsrohr (8) frei positionierbar, verbunden ist.

2. Rohrpressverbindung nach Anspruch 1
**dadurch gekennzeichnet,**
**dass** der Ringwulst als eine eine Positionierung für das Presswerkzeug bildende Kappe (2') ausgebildet ist.

3. Rohrpressverbindung nach Anspruch 1 und 2
**dadurch gekennzeichnet,**
**dass** die Kappe (2') im mittleren Überdeckungsbereich des zylindrisch ausgebildeten Abschnittes (3) des Fittingelementes (1) mit dem Leitungsrohr (8) angeordnet ist.

4. Rohrpressverbindung nach Anspruch 2
**dadurch gekennzeichnet,**
**dass** das Dichtelement (5) auf der Innenseite des zylindrisch ausgebildeten Abschnittes (3) des Fittingelementes (1) angeordnet ist.

5. Rohrpressverbindung nach Anspruch 4
**dadurch gekennzeichnet,**
**dass** das Dichtelement (5) stoffschlüssig mit der Innenseite des zylindrisch ausgebildeten Abschnittes (3) des Fittingelementes (1) verbunden ist.

6. Rohrpressverbindung nach Anspruch 4
**dadurch gekennzeichnet,**
**dass** neben dem Dichtelement (5) mindestens ein Distanzstück (6, 6') angeordnet ist, dessen radiale Erstreckung geringer ist, als die radiale Querschnittserstreckung des Dichtelementes (5) im unverpressten Zustand.

7. Rohrpressverbindung nach Anspruch 6
**dadurch gekennzeichnet,**
**dass** das Dichtelement (5) im Distanzstück (6) integriert ist.

8. Rohrpressverbindung nach Anspruch 6 oder 7
**dadurch gekennzeichnet,**
**dass** das Distanzstück (6) als eine in den zylindrisch ausgebildeten Abschnitt (3) des Fittingelementes (1) einschiebbare Hülse (14) ausgebildet ist.

9. Rohrpressverbindung nach Anspruch 8
**dadurch gekennzeichnet,**
**dass** auf der Hülse (14) auf der Außen- und auf der Innenseite je ein Dichtelement (5) angeordnet ist.

10. Rohrpressverbindung nach Anspruch 8 und 9
**dadurch gekennzeichnet,**
**dass** die Hülse (14) einschubseitig einen nach außen sich erstreckenden Kragen (7) aufweist, der nach der Montage an der Stirnfläche des zylindrisch ausgebildeten Abschnittes (3) des Fittingelementes (1) zur Anlage kommt.

11. Rohrpressverbindung nach Anspruch 1
**dadurch gekennzeichnet,**
**dass** die Kappe (2') aus Metall ist.

12. Rohrpressverbindung nach Anspruch 1
**dadurch gekennzeichnet,**
**dass** die Kappe (2') aus Kunststoff ist.

13. Rohrpressverbindung nach Anspruch 1
**dadurch gekennzeichnet,**
**dass** das Dichtelement (5) als elastischer Dichtring ausgebildet ist.
